# EUROPEAN PATENT APPLICATION

(11) **EP 1 754 874 A1**
(43) Date of publication of application: **21.02.2007**
(21) Application number: 06016643.6
(22) Date of filing: 09.08.2006
(51) Int. Cl.: F02D 41/00

(54) **Method and apparatus for controlling an internal combustion engine**

(30) Priority: 18.08.2005 JP 2005237699
(71) Applicant: Mazda Motor Corporation, Aki-gun, Hiroshima 735-8670 (JP)
(72) Inventor: Wakayama, Norihira c/o MAZDA MOTOR CORPORATION, Aki-gun Hiroshima 730-8670 (JP); Douzono, Kazuho c/o MAZDA MOTOR CORPORATION, Aki-gun Hiroshima 730-8670 (JP); Matsushita, Masanori c/o MAZDA MOTOR CORPORATION, Aki-gun Hiroshima 730-8670 (JP)
(74) Representative: Müller-Boré & Partner Patentanwälte

(57) **Abstract**

There is provided a method of controlling an internal combustion engine fuel with hydrogen. The method comprises supplying fuel and fresh air with substantially no re-circulated exhaust gas into a combustion chamber of the internal combustion engine to adjust an air fuel ratio in the combustion chamber to be a first ratio leaner than the stoichiometric air fuel ratio during a first engine operating condition. The method further comprises supplying fuel, fresh air and re-circulated exhaust gas into the combustion chamber to adjust an air fuel ratio in the combustion chamber to be a second ratio leaner than the stoichimetric air fuel ratio and richer than said first ratio during a second engine operating condition during which desired torque is greater than that during the first engine operating condition.

During the second operating condition with the less desired torque, by supplying the lean air fuel mixture with the EGR into the combustion chamber, the EGR can decrease the NOx generation caused by the lean air fuel ratio, while realizing the benefit of the lean burn operation such as fuel economy improvement. During the first operating condition with the less desired torque, by supplying the further lean air fuel mixture with substantially no EGR into the combustion chamber, the EGR generation may be minimal because of the further lean air fuel ratio and the combustion stability is maintained because of the substantially no EGR.

## Description

The present description relates to a control method and computer program product for an internal combustion engine, particularly for a lean-burn engine such as a hydrogen fueled engine, as well as to a corresponding system.

Conventionally, hydrocarbon based fuel is widely used for internal combustion engines such as automotive engines. One of disadvantages of using such fuel for the internal combustion engines is emission of hydrocarbon (HC), carbon monoxide (CO) and nitrogen oxide (NOx) as well as carbon dioxide (CO₂). To reduce such emission, lean-burn engines are known to combust the fuel at an air fuel ratio leaner than the stoichiometric air fuel ratio of the given fuel. In other words, the lean-burn engine is supplied with excess amount of air to combust the given amount of fuel to produce the desired amount of torque. Consequently, the fuel is almost fully oxidized into CO₂ and H₂O, thereby decreasing the emission of HC and CO. Further, the engine is not throttled so much as it would be at the stoichiometric air fuel ratio, thereby effectively decreasing pumping loss of the engine so as to improve operating efficiency of the engine or fuel economy. However, combustion in the lean-burn engines may occur at relatively high temperatures, which may generate NOx.

In recent years, hydrogen fueled internal combustion engines have been developed, as they are considered inherently not to emit CO₂ which is considered a major cause of the global warming. Although the hydrogen internal combustion engine essentially does not generate HC or CO from the fuel as well, it may still generate NOx during the lean burn operation.

To decrease the NOx generation from the lean-burn engines, a method is known and presented, such as in Japanese patent application publication 2004-340065, to re-circulate a portion of the exhaust gas to the engine intake system, and eventually introduce it into the combustion chamber along with the fresh air and fuel, which is well known as exhaust gas recirculation (EGR), during the lean burn. The re-circulated exhaust gas, which is inert gas, may reduce the combustion speed in the combustion chamber and the combustion temperature, thereby decreasing the NOx generation during the lean burn operation.

In the meantime, when an excess air to fuel ratio λ (= 1 at the stoichimetric air fuel ratio) is around 2.0 in a case of the hydrogen fuel, the NOx generation may be minimal. In other words, the EGR may not be necessary at that level of λ.

Desired torque from the engine or load on the engine is relatively low at that level of λ. In other words, the fuel amount is relatively small compared to the fresh air amount in the intake mixture inducted into the combustion chamber. If the exhaust gas is re-circulated during the low load as in the above prior art, proportion of the EGR in the inducted mixture into the combustion chamber may be varied by relatively large extent so that the EGR may excessively decrease the combustion speed. Consequently, it may cause some deterioration of engine performance such as combustion stability deterioration which may lead to drivability deterioration, fuel economy deterioration or emission deterioration such as emission of un-combusted fuel.

In view of the above, it is an object of the invention to improve the engine performance during the lean-burn operation.

This object is solved according to the invention by the features of the dependent claims. Preferred embodiments of the invention are subject of the dependent claims.

Accordingly, there is provided, in one aspect of the present description, a method of controlling an internal combustion engine. The method comprises supplying fuel and fresh air with substantially no re-circulated exhaust gas into a combustion chamber of the internal combustion engine to adjust an air fuel ratio in the combustion chamber to be a first ratio leaner than the stoichiometric air fuel ratio during a first engine operating condition. The method further comprises supplying fuel, fresh air and re-circulated exhaust gas into the combustion chamber to adjust an air fuel ratio in the combustion chamber to be a second ratio leaner than the stoichimetric air fuel ratio and richer than said first ratio during a second engine operating condition during which desired torque is greater than that during the first engine operating condition.

In accordance with the method, during the second operating condition with the less desired torque, by supplying the lean air fuel mixture with the EGR into the combustion chamber, the EGR can decrease the NOx generation caused by the lean air fuel ratio, while realizing the benefit of the lean burn operation such as fuel economy improvement. During the first operating condition with the less desired torque, by supplying the further lean air fuel mixture with substantially no EGR into the combustion chamber, the EGR generation may be minimal because of the further lean air fuel ratio and the combustion stability is maintained because of the substantially no EGR. Therefore, the method may improve the engine performance such as drivability, fuel economy and emission over the range of lean-burn engine operation.

The supplied fuel may be hydrogen such as gaseous hydrogen. In that case, the emission of CO₂, HC and CO can be eliminated, thereby leading to a further emission performance improvement.

The EGR may be adjusted by controlling an EGR valve configured to open and close an external EGR passage connecting between the intake air passage and exhaust gas passage, which can control the EGR in a desired manner. Further, the air fuel ratio may be adjusted by controlling a throttle valve and a fuel injector, which can control it in a desired manner. During the second operating condition, the air fuel ratio may be made richer and the EGR may be increased as the desired engine torque increases. Although the NOx generation may be increased as the air fuel ratio is richer during the second operating condition, the EGR, which is increased corresponding to the air fuel ratio, may suppress the NOx generation accordingly.

At least fuel and air may be supplied to adjust the air fuel ration in the combustion chamber to be the stoichiometric air fuel ratio during a third engine operating condition during which desired engine torque is greater than that during the first and second engine operating conditions. During the third operating condition, since the air fuel ratio is at the stoichiometric, the NOx generation is relatively low and NOx, if any, can be easily purified with a conventional three way catalyst.

EGR may be supplied during the third operating condition, particularly in the case of the hydrogen being fuel. Since the hydrogen is more likely to be ignited than the hydrocarbon based fuel, it may be ignited prior to the normal ignition timing or spark ignition timing during the compression stroke (pre-ignition), which may cause engine damage. By supplying the EGR to the stoichiometric mixture during the third operating condition, the pre-ignition can be eliminated because of the inert property of the EGR. In the case of using the external EGR passage, the EGR may be cooler, thereby further suppressing the pre-ignition property of the fuel.

According to one embodiment, the method further comprises a step of supplying substantially no re-circulated exhaust gas into said combustion chamber during said third engine operating condition or, alternatively, a step of supplying re-circulated exhaust gas into said combustion chamber during said third engine operating condition.

Furthermore, the exhaust gas may be re-circulated to said combustion chamber through an external EGR passage and an intake manifold of said engine.

An EGR valve to open and close said external EGR passage may be closed during the first engine operating condition.

According to one further embodiment, there is provided a method for controlling an internal combustion engine, comprising:
supplying hydrogen fuel and fresh air with substantially no re-circulated exhaust gas into a combustion chamber of said internal combustion engine to adjust an air fuel ratio in said combustion chamber to be a first ratio leaner than the stoichiometric air fuel ratio during a first engine operating condition; and
supplying hydrogen fuel, fresh air and re-circulated exhaust gas into said combustion chamber to adjust an air fuel ratio in said combustion chamber to be a second ratio leaner than the stoichimetric air fuel ratio and richer than said first ratio during a second engine operating condition where desired engine torque is greater than that during said first engine operating condition.

During said second engine operating condition, the air fuel ratio may be made richer and the re-circulated exhaust gas supplied into said combustion chamber is increased as desired engine torque increases.

The method may further comprise supplying at least fuel and fresh air to adjust an air fuel ratio in said combustion chamber to be the stoichiometric air fuel ratio during a third engine operating condition where desired engine torque is greater than that during said second engine operating condition.

The method may further comprise supplying substantially no re-circulated exhaust gas into said combustion chamber during said third engine operating condition.

The method may further comprise supplying re-circulated exhaust gas into said combustion chamber during said third engine operating condition.

The exhaust gas may be re-circulated to said combustion chamber through an external EGR passage and an intake manifold of said engine.

An EGR valve to open and close said external EGR passage may be closed during the first engine operating condition.

Furthermore, there is provided, in one further aspect of the present description, a computer program product, in particular stored on a computer-readable storage medium or embodied in a signal, comprising computer-readable instructions, which when loaded and executed on a suitable computer system perform a method for controlling an internal combustion engine according to the invention or a preferred embodiment thereof.

Furthermore, there is provided, in one further aspect of the present description, a system comprising an internal combustion engine, a fuel injector configured to supply fuel into a combustion chamber of said engine, a throttle valve arranged in an intake air passage to said combustion chamber, an EGR passage connecting between said intake air passage and an exhaust gas passage from said combustion chamber, an EGR valve configured to open and close said EGR passage, and a controller which is configured to: (a) control said fuel injector, said throttle valve and said EGR valve so as to adjust the air fuel ratio in said combustion chamber of said engine to be a first air fuel ratio leaner than the stoichiometric air fuel ratio and close said EGR passage during a first engine operating condition; and (b) control said fuel injector, said throttle valve and said EGR valve so as to adjust the air fuel ratio in said combustion chamber of said engine to be a second air fuel ratio leaner than the stoichiometric air fuel ratio and richer than said first air fuel ratio and open said EGR passage during a second engine operating condition where desired engine torque is greater than that during said second engine operating condition.

The controller may control said EGR valve between a fully open and fully closed positions so as to increase opening of said EGR passage as the desired engine torque increases during said second engine operating condition.

The controller may be further configured to control said fuel injector and said throttle valve to adjust the air fuel ratio to be the stoichiometric air fuel ratio during a third engine operating condition during which the desired torque is greater than that during said second engine operating condition.

The system may further comprise a hydrogen source to supply hydrogen to said fuel injector as the fuel.

The fuel injector may inject the hydrogen in gaseous form from said hydrogen source. The advantages described herein will be more fully understood by reading an example of embodiments in which the above aspects are used to advantage, referred to herein as the Detailed Description, with reference to the drawings. It should be understood that even though embodiments are separately described, single features thereof may be combined to additional embodiments.
Figure 1 is a schematic diagram of an engine system according to an embodiment of the present description;
Figure 2 is a flowchart illustrating a control routine of the first embodiment of the present description;
Figure 3 is a map indicating operation modes of the engine indexed with engine speed and torque according to the embodiment of the present description;
Figure 4 is a map indicating an opening of EGR valve indexed with engine speed and torque according to the embodiment of the present description;
Figure 5 is a graph showing a relationship between NOx emission and air fuel ratio;
Figure 6 is a graph showing a relationship between an actual air fuel ratio in the combustion chamber and an EGR valve opening when an initial air fuel ratio is set ë=2.0; and
Figure 7 is a flowchart of a control routine according to a second embodiment of the present description.

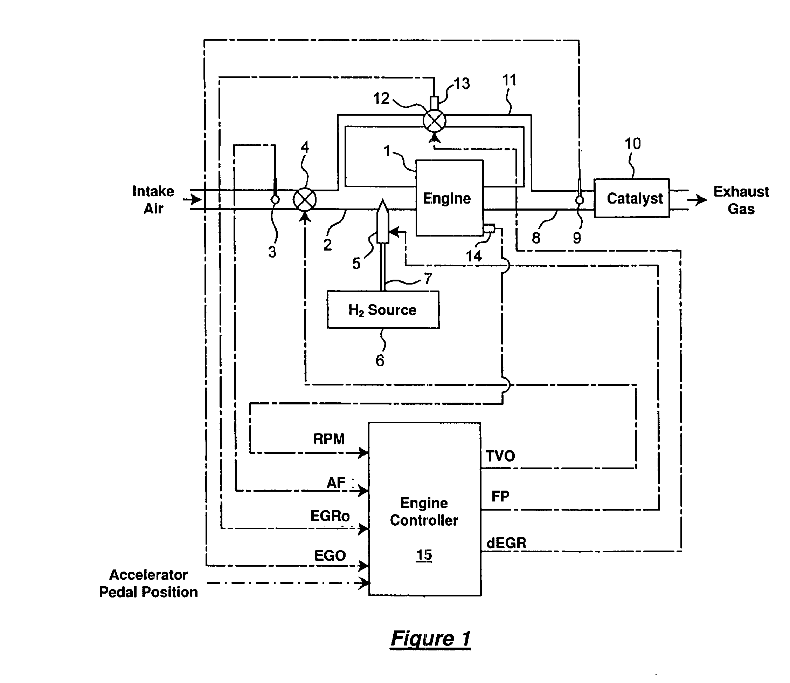

The embodiment of the present description will now be described with reference to the drawings, starting with Figure 1, in which an engine system including an internal combustion engine 1 according to the embodiment is shown. Preferably, the internal combustion engine 1 uses hydrogen as its fuel, and particularly is a multiple-cylinder spark ignited hydrogen engine with at least one spark plug for each combustion chamber or cylinder (not shown).

The combustion chamber is supplied with fresh air through an intake system or intake passage 2 for combusting the hydrogen in the combustion chamber. There are provided, on the intake system 2 sequentially from the upstream side of the airflow, an airflow sensor 3, a throttle valve 4, and a fuel injector 5 which is preferably provided for each cylinder. The airflow sensor 3 detects a flow rate or air mass or air flow of the intake air through the intake passage 2 and outputs an air flow signal AF to an engine controller 15 which is described in more detail below. The throttle valve 4 regulates the intake airflow when it is at least partly closed as is known in the art. Its opening is adjusted or controlled by an actuator not shown which is controlled by the engine controller 15 with a signal TVO. The fuel injector 5 injects fuel into the intake air passage 2, particularly an intake port of the engine 1, when it opens in a particular engine cycle. Its opening, particularly an opening duration, is controlled by a pulse width signal FP from the engine controller 15 as is known in the art.

The fuel injector 5 is supplied with the fuel (preferably hydrogen, particularly gaseous hydrogen) from a fuel or hydrogen source 6 through a fuel or hydrogen supply passage 7. The hydrogen source 6 may be, for example, a high pressure gas tank which stores high pressure gaseous hydrogen, a liquid tank which stores low temperature liquid hydrogen, or a hydrogen storage which is filled with hydrogen storage material inside. When the hydrogen storage material (for example, metal hydride) in its cooled state contacts with gaseous hydrogen, it may adsorb the hydrogen with one thousandths of the volume. On the other hand, when the storage material is heated, it will release the stored hydrogen with a higher pressure.

The exhaust gas or combustion gas generated by the combustion of the hydrogen in the combustion chamber of the engine 1 flows out through an exhaust passage or exhaust system 8. There are provided, on the exhaust system 8 sequentially from the upstream side of the exhaust gas flow, an exhaust gas oxygen (EGO) sensor 9 and an exhaust gas purification apparatus 10. The EGO sensor 9 detects an oxygen concentration in the exhaust gas, that is an excess air ratio X or an air fuel ratio of mixture of the fuel (hydrogen) and the air supplied to the combustion chamber. When the excess air ratio λ is equal to 1, the mixture is in a stoichimetric condition, that is, the oxygen amount is not excessive or short compared to the fuel amount. The EGO sensor 9 outputs a signal EGO to the engine controller 15 which outputs the signal FP to the fuel injector 5 to adjust or control the air fuel ratio in the combustion chamber. The exhaust gas purification apparatus 10 is preferably, a three way catalyst. It can reduce the NOx generated from the combustion of the hydrogen with the un-combusted hydrogen there when the air fuel ratio is adjusted substantially at the stoichiometry. It is not limited to the three way catalyst, alternatively it may be a lean NOx trap, which can store the NOx therein, when the air fuel ratio is lean. It releases the stored NOx and reduces it with oxidant such as fuel or hydrogen, when the air fuel ratio is rich or stoichiometric.

The engine system comprises an EGR passage 11 for re-circulating a portion of the exhaust gas in the exhaust passage 8 to the intake passage 2 (exhaust gas recirculation: EGR). The EGR passage 11 connects a part of the exhaust system 8 upstream of the EGO sensor 3 with a part of the intake passage 2 upstream of the fuel injector 5 and downstream of the throttle valve 4. There is provided, on the EGR passage 11, an EGR valve 12 which adjust or control a flow rate of the re-circulated exhaust gas. The opening of the EGR valve 12 is controlled to be the desired by the engine controller 15 with a signal dEGR input to an actuator of the EGR valve 12. The opening is detected by an EGR valve opening sensor 13 which outputs a signal EGRo to the engine controller 15 for a (preferably feedback) control of the opening of the EGR valve 12 which is ranged between about 0% and about 100%.

The engine controller 15, as known in the art, has a memory storing a program and data and a microprocessor executing instructions included in the program based on the data in the memory and the inputs from the various sensors described above including the intake air flow signal AF, the EGR valve opening signal EGRo and/or the signal EGO from the EGO sensor 9. In addition to the above input(s), an engine rotational speed signal RPM from an engine speed sensor 14 and/or a position of an accelerator pedal that is indicating a desired engine power dP preferably are input to the controller 15. Based on these input(s), the controller 15 outputs the signal TVO to the actuator of the throttle valve 4 and the signal FP to the fuel injector 4 collectively to control the air fuel ratio, and/or the signal dEGR to the actuator of the EGR valve 12 to control the EGR amount.

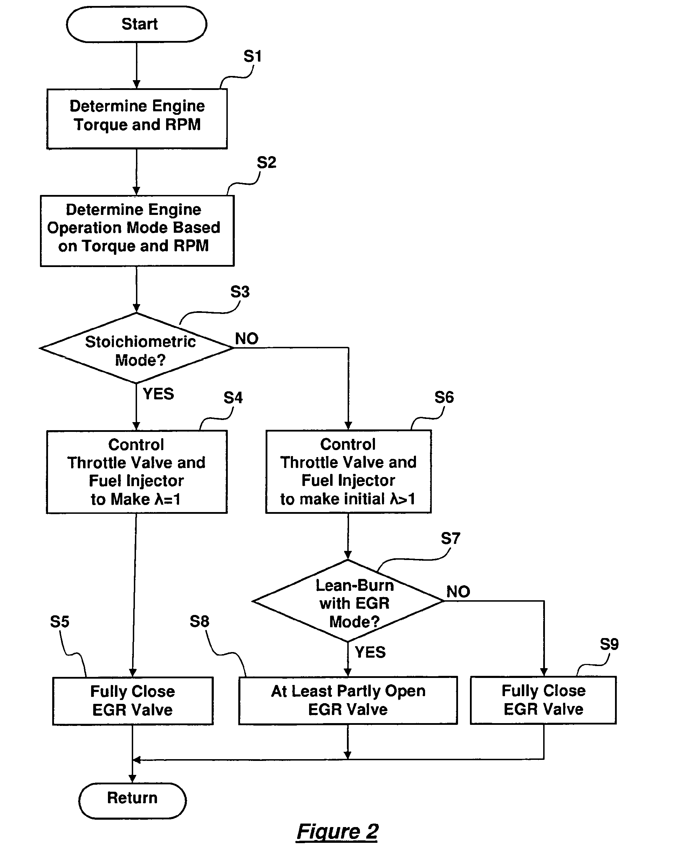

The air fuel ratio and EGR control by the engine controller 15 will now be described with reference to a flowchart shown in Figure 2. Following the start of the control routine, at a step S1, current torque TQ generated by the engine 1 and the engine speed RPM detected by the engine speed sensor 14 are determined. The torque TQ may be estimated based on the airflow rate or air mass or air flow detected or determined by the airflow sensor 3 and/or the air fuel ratio detected or determined by the EGO sensor 9. The torque estimation may be made, for example, by referencing to a two dimensional map or table or relationship indexed with or as a function of the airflow AF and the air fuel ratio and stored in the memory of the controller 15. Alternatively, desired torque dTQ may be computed from the desired engine power dP estimated from the accelerator pedal position and the engine speed RPM, for example, from the equation: dTQ = dP / RPM.

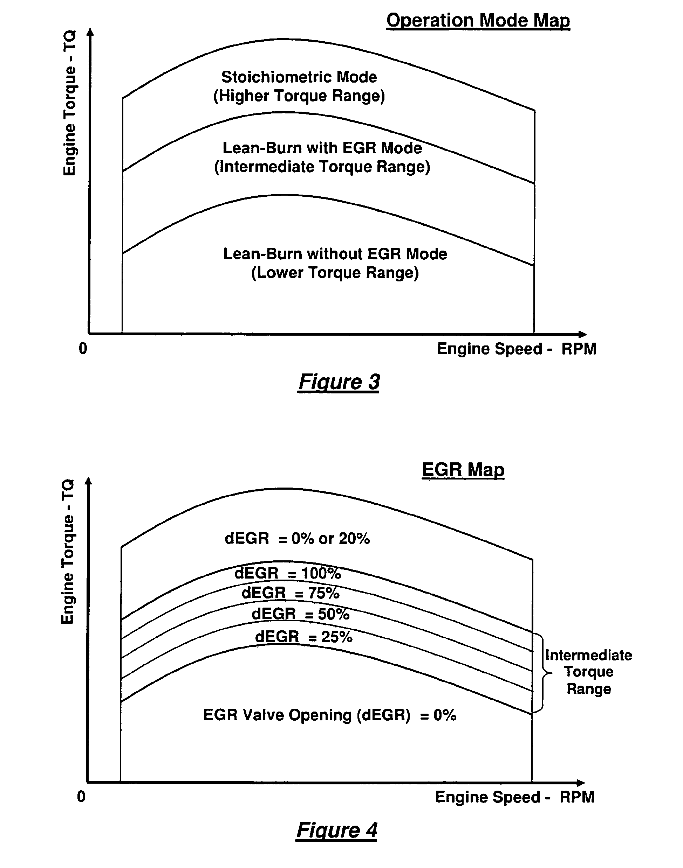

The routine proceeds to a step S2, where a target operation mode is determined based on the engine torque TQ and the engine speed RPM determined at the step S1. The mode determination may be made, for example, by referencing a two dimensional map indexed with the engine torque and speed, such as an engine operation mode map shown in Figure 3.

As shown in Figure 3, the engine operation mode map has a lower torque range (a first engine operating condition), an intermediate torque range (a second engine operating condition) and a higher torque range (a third engine operating condition) arranged sequentially from the lower torque side to the higher torque side.

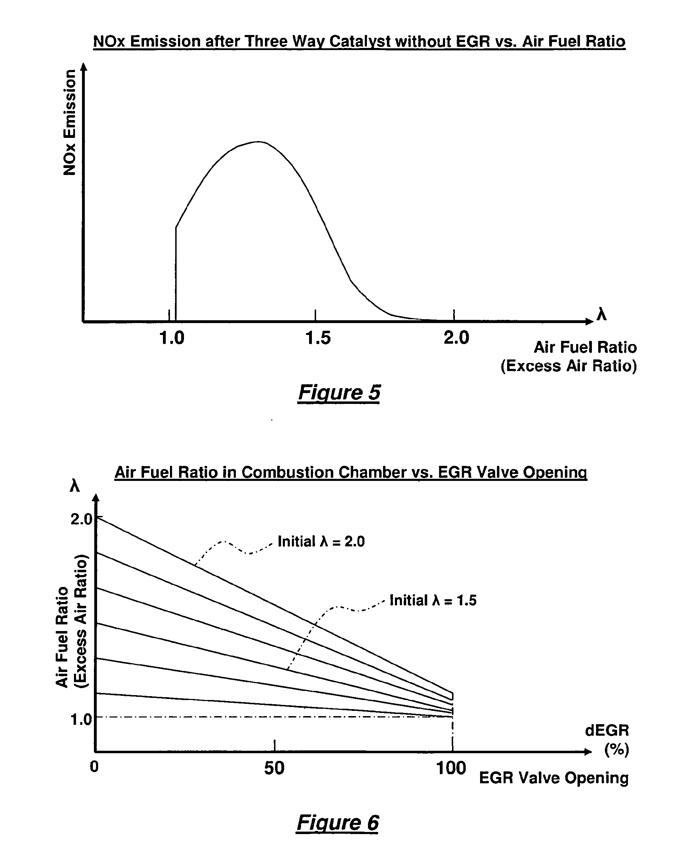

In the lower torque range, the desired fuel amount is smaller. So, to reduce the pumping loss of the engine 1, the air fuel ratio is set to be lean of stoichiometry, for example, the greater than λ = 1.8, by relatively opening the throttle valve 4. As illustrated in a graph of Figure 5 showing NOx emission versus λ without EGR, at an air fuel ratio is leaner than λ = 1.8, NOx is substantially not generated. So, during the first engine operating condition, the EGR preferably is not supplied and then the operation mode would be called a lean-burn without EGR mode.

In the intermediate torque range, considering the EGR described later, the air fuel ratio in the combustion chamber is set supposedly to be lean of the stoichiometry, for example λ = 1.05 through 1.8 for the decrease of the pumping loss

of the engine 1 by relatively opening the throttle valve 4 or in some cases, fully opening it. In this range of λ without EGR, NOx is generated through the combustion and can not be well adsorbed by the three way catalyst 10, so that the NOx emission is substantial as illustrated in the graph of Figure 5. Therefore, to suppress the NOx emission, prevention of the NOx generation itself during the combustion is desired. In that respect, the EGR is supplied to decrease the combustion speed to prevent the NOx generation during the second engine operating condition, then the operation mode would be called a lean-burn with EGR mode.

In the high torque range, the air fuel ratio is set to be the stoichiometric air fuel ratio (in other words, substantially λ = 1), then the operation mode would be called a stocihiometric mode. At the stoichiometric air fuel ratio, although the NOx is still generated through the combustion, the three way catalyst 10 can be fully operative and effectively reduce the NOx into nitrogen, as indicated in the graph of Figure 5. Therefore, the EGR is not needed for preventing the NOx generation during the third engine operating condition.

Referring back to the flowchart of Figure 2, the routine proceeds to a step S3, where it is determined whether the current engine operating condition is within the higher torque range, in other words, whether the operation mode is the stoichiometric mode or not. If it is determined that the operation mode is the stoichiometric mode (YES) at the step S3, the routine proceeds to a step S4, where the throttle valve 4 and the fuel injector 5 are controlled to adjust the air fuel ratio to be the stoichiometric while the engine 1 generates the desired torque. This control can be made for example by initially determining the throttle valve opening TVO based on the desired torque dTQ, then feedback controlling the fuel injection amount FP based on the exhaust gas oxygen concentration EGO detected by the EGO sensor 9, as known in the art.

Further then the routine proceeds to a step S5, where the EGR valve 12 is fully closed, since as described above, the EGR preferably is not needed for preventing the NOx generation. In this instance, the controller 15 may compute the desired EGR valve opening dEGR to be about 0%. If it is already fully closed, the fully closed state is maintained or the dEGR is maintained to be about 0%. Although, the EGR is not necessary for the NOx prevention, it may be useful for preventing pre-ignition of hydrogen in the combustion chamber before a normal ignition timing, which may cause an engine damage. Therefore, instead of fully closing the EGR valve 12 in the stoichiometric mode, the valve may be slightly opened, for example, by setting the dEGR to be about 20% of the full opening.

If it is not determined that the current operation mode is the stoichiometric mode (NO) at the step S3, the routine proceeds to a step S6, where the throttle valve 4 and the fuel injector 5 are controlled to adjust the air fuel ratio to be lean of the stoichiometry while the engine 2 generates the desired torque. In this instance, the throttle valve 4 and the fuel injector 5 may be controlled so as to adjust the air fuel ratio supposedly to be λ = 2 without considering the EGR, which can be called an initial λ. The air fuel ratio adjustment may be made, for example, by referring to a two dimensional map stored in the memory of the controller 15, indexed to the desired engine torque dTQ and the engine speed RPM and mapped with sets of values of the target throttle opening TVO and the fuel injection amount FP. However, at a relatively higher torque region in the intermediate torque range, the TVO is set to about 100%, since λ = 2 can not be realized in that region because the fuel injection amount FP is about a half or more of that corresponding to the maximum torque. In other words, the air fuel ratio would fall within a range of substantial NOx generation as shown in Figure 5. For this NOx generation, EGR will be introduced as described later. Alternatively, the initial λ may be and varied between about 1.8 and about 2.5 depending on various operating conditions of the engine 1, for example, the desired torque dTQ as described above, or the air fuel ratio EGO detected by the EGO sensor 9 to compensate any variation on physical configuration of the EGR passage 11 and/or the EGR valve 12 or any other physical and operational variation on the system.

Then, the routine proceeds to a step S7, where it is determined whether the current operating condition is within the intermediate torque range, in other words, whether the operation mode is the lean-burn with EGR mode or not. If it is determined that the operation mode is the lean-burn with EGR mode (YES) at the step S7, as described above, the air fuel ratio may fall within the range of the substantial NOx generation as shown in Figure 5. The routine proceeds to a step S8, where the EGR valve12 is at least partly opened to suppress the NOx generation. In this instance, the controller 15 may refer to a two dimensional EGR map stored in its memory and indexed with the engine torque TQ and the engine speed RPM as shown in Figure 4 and output the desired EGR valve opening dEGR.

The EGR map shown in Figure 4 has target EGR valve opening values dEGR in the intermediate torque region of Figure 3. The dEGR's (in other words, EGR rates) are set in the EGR map to substantially be 25%, 50%, 75% and 100% incrementally stepwise as the engine torque TQ increases, in other words, the fuel injection amount FP increases, which corresponds to the NOx generation and its suppression need. Although the dEGR is set stepwise in the map of Figure 4, it may be varied continuously, for example, from about 25% to about 100%, or in any other form pertinent, as long as it is set greater as the desired engine torque increases. By supplying the EGR at the step S7, the EGR will consist of a part of the inducted air into the combustion chamber, the air fuel ratio λ of which is set to be for example about 2.0 without considering the EGR at the step S6. Consequently, the air fuel ratio in the combustion chamber may be shifted to the rich side, for example, from λ = 2.0 without EGR to 1.8 in a case of about 25% of the EGR valve opening dEGR and 1.05 in a case of about 100% dEGR, as shown in a graph of Figure 6.

On the other hand, if it is not determined that the operation mode is the lean-burn without EGR mode (NO) at the step S7, the routine proceeds to a step S9. In this case, the current operating condition falls within the lower torque range. At the step S9, the EGR valve 12 is fully closed. In this instance, the controller 15 may compute the desired EGR valve opening dEGR to be about 0%. If it is already fully closed, the fully closed state is maintained or the dEGR is maintained to be about 0%. In other words, the operation mode has entered the lean-burn with EGR mode illustrated in Figure 3. Since the air fuel ratio is set to be λ = 2.0 without considering EGR at the step S6 and the EGR is not supplied at the step S9, the air fuel ratio in the combustion chamber will still be λ = 2.0. At this air fuel ratio, the NOx generation is substantially zero as described above and as shown in the graph of Figure 5, so the EGR is not needed.

During the engine operation in the lower torque range at the air fuel ratio λ = 2.0, the pressure in the intake passage 2 is substantially lower than that in the exhaust passage 8. In other words, the pressure difference is greater. If the EGR were supplied, the opening of EGR valve 12 would be needed to be very precisely controlled by the controller 15. Otherwise, proportion of the EGR in the inducted mixture into the combustion chamber would be varied by relatively large extent so that the EGR might excessively decrease the combustion speed leading to deterioration of combustion stability. Rather, the control routine stops the EGR in this instance to improve the drivability, the emission, and/or the fuel economy.

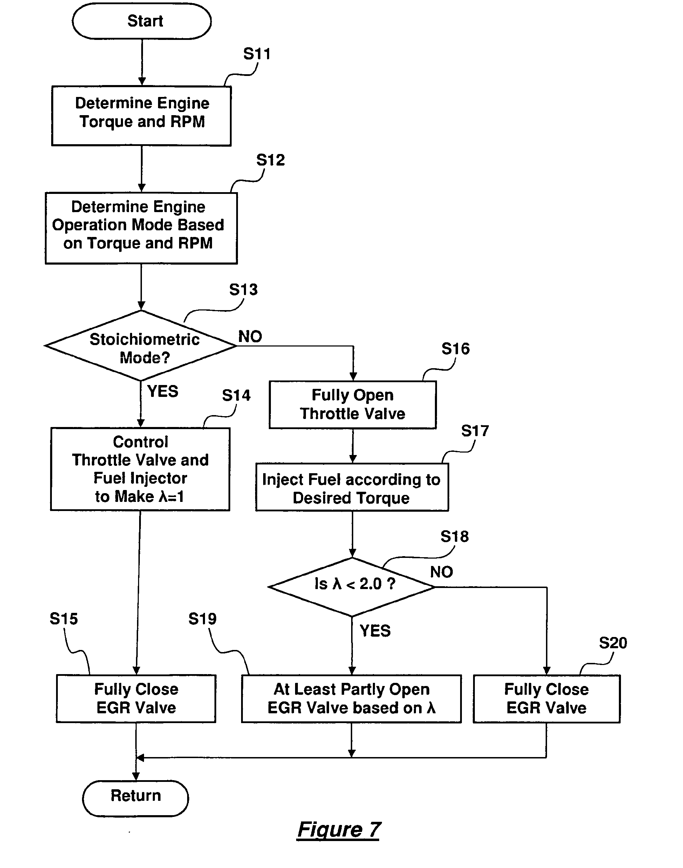

Now a second embodiment of the present description will be described mainly with reference to a flowchart of Figure 7. The second embodiment is similar or same as the first embodiment described above except for a control routine illustrated in a flowchart of the Figure 7.

Steps S11 through S15 are same as the steps S1 through S5 in Figure 2. If it is not determined that the operation mode is the stoichiometric mode (NO) at the step S13, the routine proceeds to a step S16, the throttle valve 4 is fully opened, in other words, the signal TVO is determined to be about 100%. Then, the routine proceeds to a step S17, where the fuel injector 5 is controlled to inject the fuel amount FP according to the desired torque dTQ. In this instance, the air fuel ratio preferably will be as lean as possible, because the throttle valve 4 is fully opened. However, the fuel injection amount FP does not corresponds to a full load. So, the air fuel ratio will be richer as the desired torque or the fuel injection amount increases, in other words, the air fuel ratio of the lower torque range in Figure 3 will be leaner than that of the intermediate torque range. Although the air fuel ratio is made as lean as possible at the steps S16 and S17 in this embodiment, it may be richer to make it to fall within a lean limit of the given fuel.

Then, the routine proceeds to a step S18, where it is determined whether the excess air ratio λ is smaller than 2.0 or not. The excess air ratio can be determined or evaluated by (preferably directly) detecting it with the EGO sensor 9 and/or by calculating it based on the airflow rate AF, the engine speed RPM and the fuel injection amount FP, or by any other way pertinent in the art. If it is determined that the excess air ratio λ is smaller than 2.0 at the step S18 (YES), which corresponds to the lower torque range in Figure 3, the routine proceeds to a step S19.

At the step S19, the routine controls the EGR valve 12 with the desired opening dEGR, which is determined based on the detected excess air ratio λ determined at the step S18, so that the dEGR corresponds to the expected NOx emission at the given air fuel ratio as shown in Figure 5. Eventually, the dEGR may be determined as shown in Figure 4.

On the other if it is not determined that the λ < 2.0 at the step S18 (NO), which means the NOx generation is substantially zero as shown in Figure 5, the routine proceeds to a step S20. Then, the EGR valve 12 is fully closed, in other words, the dEGR is set to about 0%, because the EGR preferably is not needed as described above.

Although the second embodiment is different from the first embodiment in terms of controlling the air fuel ratio, it may improve the drivability, the emission and/or the fuel economy as the first embodiment may do.

Although, in the above embodiments, the hydrogen fuel has been mainly referred to, the fuel may be gasoline, alcohol, diesel, bio-diesel or any other fuel pertinent to this control method.

Accordingly, there is provided a method of controlling an internal combustion engine fuel with a fuel such as hydrogen. The method comprises supplying fuel and fresh air with substantially no re-circulated exhaust gas into a combustion chamber of the internal combustion engine to adjust an air fuel ratio in the combustion chamber to be a first ratio leaner than the stoichiometric air fuel ratio during a first engine operating condition. The method further comprises supplying fuel, fresh air and re-circulated exhaust gas into the combustion chamber to adjust an air fuel ratio in the combustion chamber to be a second ratio leaner than the stoichimetric air fuel ratio and richer than said first ratio during a second engine operating condition during which desired torque is greater than that during the first engine operating condition.

During the second operating condition with the less desired torque, by supplying the lean air fuel mixture with the EGR into the combustion chamber, the EGR can decrease the NOx generation caused by the lean air fuel ratio, while realizing the benefit of the lean burn operation such as fuel economy improvement. During the first operating condition with the less desired torque, by supplying the further lean air fuel mixture with substantially no EGR into the combustion chamber, the EGR generation may be minimal because of the further lean air fuel ratio and the combustion stability is maintained because of the substantially no EGR.

It is needless to say that the invention is not limited to the illustrated embodiments and that various improvements and alternative designs are possible without departing from the substance of the invention as claimed in the attached claims.

## Claims

1. A method for controlling an internal combustion engine (1), comprising the steps of:
supplying fuel and fresh air with substantially no re-circulated exhaust gas into a combustion chamber of said internal combustion engine (1) to adjust an air fuel ratio in said combustion chamber to be a first ratio leaner than the stoichiometric air fuel ratio during a first engine operating condition; and
supplying fuel, fresh air and re-circulated exhaust gas into said combustion chamber to adjust an air fuel ratio in said combustion chamber to be a second ratio leaner than the stoichimetric air fuel ratio and richer than said first ratio during a second engine operating condition during which the desired torque is greater than that during said first engine operating condition.

2. The method as described in claim 1, wherein the fuel supplied to said engine (1) is hydrogen.

3. The method as described in claim 2, wherein the hydrogen is supplied to said engine in gaseous form.

4. The method as described in any one of the preceding claims, wherein during said second engine operating condition, the air fuel ratio is made richer and the re-circulated exhaust gas supplied into said combustion chamber is increased as the desired engine torque increases.

5. The method as described in any one of the preceding claims, further comprising a step of supplying at least fuel and fresh air to adjust the air fuel ratio in said combustion chamber to be the stoichiometric air fuel ratio during a third engine operating condition during which the desired engine torque is greater than that during said second operating condition.

6. The method as described in claim 5, further comprising a step of supplying substantially no re-circulated exhaust gas into said combustion chamber during said third engine operating condition.

7. The method as described in claim 5, further comprising a step of supplying re-circulated exhaust gas into said combustion chamber during said third engine operating condition.

8. A computer program product comprising computer-readable instructions, which when loaded and executed on a suitable computer system perform a method for controlling an internal combustion engine as described in any one of the preceding claims.

9. A system comprising:
an internal combustion engine (1);
a fuel injector (5) configured to supply fuel into a combustion chamber of said engine (1);
a throttle valve (4) arranged in an intake air passage (2) to said combustion chamber;
an EGR passage (11) connecting between said intake air passage (2) and an exhaust gas passage (8) from said combustion chamber;
an EGR valve (12) configured to open and close said EGR passage (11); and
a controller (15),
wherein said controller (15) controls said fuel injector, said throttle valve and said EGR valve so as to adjust the air fuel ratio in said combustion chamber of said engine to be a first air fuel ratio leaner than the stoichiometric air fuel ratio and close said EGR passage during a first engine operating condition, and controls said fuel injector, said throttle valve and said EGR valve so as to adjust the air fuel ratio in said combustion chamber of said engine to be a second air fuel ratio leaner than the stoichiometric air fuel ratio and richer than said first air fuel ratio and open said EGR passage during a second engine operating condition where desired engine torque is greater than that during said second engine operating condition.

10. The system as described in claim 9, further comprising a hydrogen source (6) to supply hydrogen to said fuel injector as the fuel.

11. The system as described in claim 10, wherein said fuel injector (5) injects the hydrogen in gaseous form from said hydrogen source (6).
